# EUROPEAN PATENT SPECIFICATION

(11) **EP 0 384 748 B1**
(45) Date of publication and mention of the grant of the patent: **14.07.1993**
(21) Application number: 90301896.8
(22) Date of filing: 20.02.1990
(51) Int. Cl.: A47J 36/30, F24J 1/00

(54) **Ignition system and self-heating container**
Zündsystem und sich selbst erhitzender Behälter
Système d'allumage et conteneur auto-chauffant

(30) Priority: 22.02.1989 JP 18901/89 U; 28.06.1989 JP 74838/89 U
(43) Date of publication of application: 29.08.1990
(73) Proprietor: NISSIN SHOKUHIN KABUSHIKI KAISHA, Osaka 532 (JP)
(72) Inventor: Suzuki, Ryoichi, Yokohama 222 (JP); Yamauchi, Kunio, Hikone 522 (JP); Kawabata, Choji, Tatebayashi 374 (JP); Nitobe, Masaaki, Tochigi 328 (JP); Ando, Koki, Tokyo 158 (JP)
(74) Representative: West, Alan Harry

(56) References cited:
- EP-A- 0 244 837
- WO-A-83/00425
- CH-A- 280 418
- GB-A- 572 573
- US-A- 3 743 472
- PATENT ABSTRACTS OF JAPAN vol. 7, no. 106 (M-213)(1251) 10 May 1983, & JP-A-58 28924 (HITACHI SEISAKUSHO K.K.) 21 February 1983,

## Description

This invention relates to a container which is equipped with a heating function and which contains a pyrogen or self-burning type heat-generating agent. The invention also relates to an ignition system for such a container.

Conventional self-heating containers of this type are shown in, for example, Japanese early utility model publications S.62-146427 and S.63-42089, according to which the pyrogen is ignited by means of a fuse or a filament-type electric heater. In addition, Japanese early patent publication S.52-19358 shows ignition by an electric heater or by a lighter via an ignition hole.

In the conventional ignition methods, ignition requires a battery, lighter or other ignition means, which was inconvenient to use. Furthermore, a lighter or fuse is difficult to use outdoors during rain or strong winds.

Japanese Patent Application No. 56-126670 describes an automatic firing device in which a spark is generated as a result of friction between a rotatable lighter rotor and a lighter stone which is brought into contact with the rotor.

The present invention seeks to provide an ignition system which can be contained within a self-heating container, for easy and safe ignition without requiring a lighter, battery or the like.

Accordingly, the present invention provides an ignition system for a self-heating container including a heater which comprises a pyrogen, the ignition system comprising a metal plate adapted for contact on its one side with a pyrogen, a shaft journalled to the plate, a sparking wheel having an abrasive cylindrical surface and fixed coaxially to the shaft on the other side of the plate, a flint supported by the plate and compressed against the abrasive surface to generate sparks when the wheel is caused to rotate, characterised in that the ignition system comprises also a screen formed on the plate adjacent the abrasive surface and the flint, and an opening formed in the plate adjacent the screen, the screen being angled to deflect sparks towards the opening and pass them through the opening to the one side of the plate.

Further preferred embodiment of the invention are defined in Claims 2 and 3.

The invention will now be described in greater detail by way of example only with reference to the accompanying drawings, in which:
Fig. 1 is a side view in vertical section of an ignition system according to the invention;
Fig. 2 is an exploded perspective view of the ignition system of Fig. 1;
Figs. 3 and 4 are perspective views of modified parts of the ignition system;
Fig. 5 is a side view in vertical section of parts for use with the ignition system;
Fig. 6 is a top plan view of the plastics spring element shown in Fig. 5;
Fig. 7 is a side view in vertical section of a self-heating beverage container incorporating the ignition system according to the invention;
Fig. 8 is a side view in vertical section of a self-heating food container incorporating the ignition system according to the invention;
Fig. 9 is a side view in vertical section of parts of another self-heating container incorporating the ignition system according to the invention.

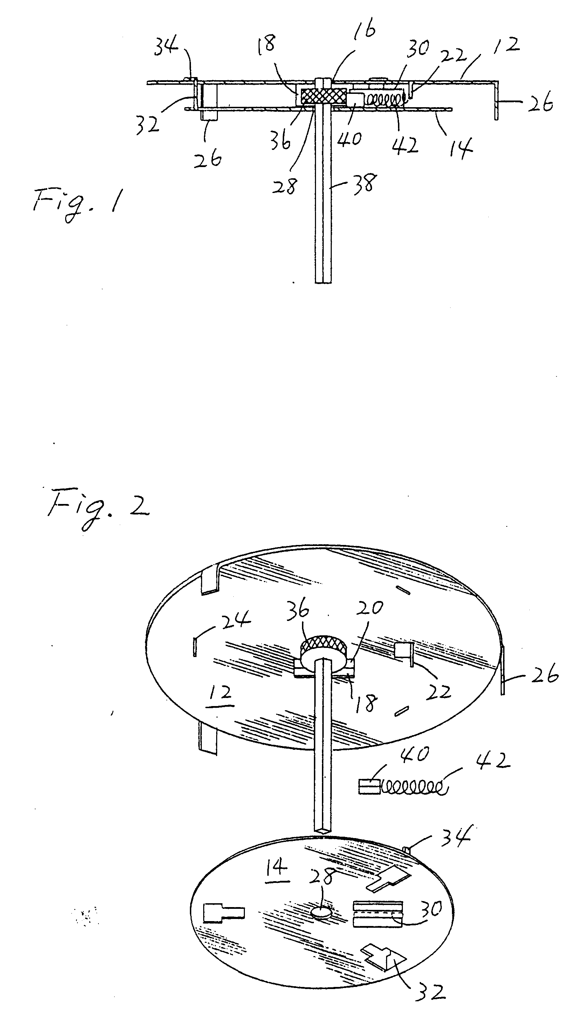

With reference to Figs. 1 and 2, an ignition system according to the invention includes two spaced parallel metal discs 12 and 14. The upper larger disc 12 has a central hole 16, a rectangular screen 18 and a rectangular opening 20. The screen and opening are formed by cutting the disc 12 to form three sides of the opening 20 and bending the area so defined along the fourth side. The screen 18 extends from the outer longer side of opening 20 downwardly at an angle of about 45 degrees toward the central hole 16.

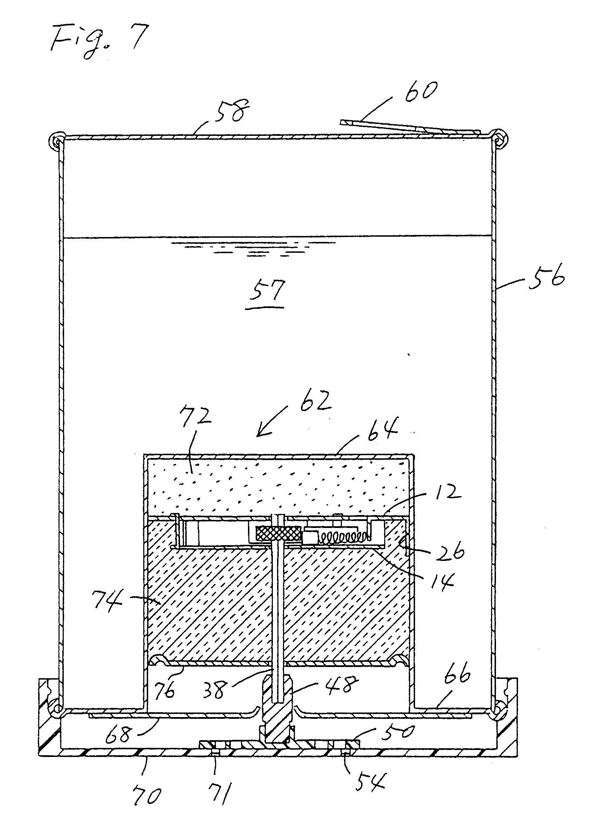

The disc 12 further has a lug 22 formed in a similar manner by cutting the disc 12 and bending the section downwardly, slots 24, and peripheral tongues 26 bent downwardly for use as will be explained with reference to Fig. 7. The lug 22 faces along a radius of the disc 12 which extends in parallel with the screen 18 and opening 20.

The lower smaller disc 14 has a central hole 28 and two parallel holding walls 30 formed by cutting the disc and bending the sections upwardly adjacent the central hole. The walls 30 extend adjacently along both sides of a radius of the disc 14.

The lower disc 14 further has spacers 32 formed by cutting the disc and bending the sections upwardly. Each spacer 32 is formed with a top nail 34, which extends through one of the slots 24 and is bent over to fix the discs 12 and 14 together.

A sparking wheel 36 has a cylindrical abrasive surface and is fixed to a shaft 38 adjacent the upper end of the shaft. The shaft 38 is square or polygonal in cross section. The shaft is supported rotatably by the central disc holes 16 and 28 and extends below the lower disc 14, with the wheel 36 rotatably interposed between the discs 12 and 14.

The wheel 36 has a diameter smaller than the length of screen 18 and opening 20. The lower ends of wheel 36 and screen 20 are close to each other.

A flint 40 and a spring 42 are held in the space formed by the discs 12 and 14, lug 22, walls 30 and wheel 36. The flint 40 is compressed against the abrasive surface of the wheel 36 by the spring 42.

In operation, the shaft 38 is rotated by suitable means in a clockwise direction as seen from below to generate sparks by the friction between the wheel 36 and the flint 40. Most of the sparks fly off perpendicularly to the axis of wheel 36, and are deflected by the screen 18 upwardly to pass through the opening 20.

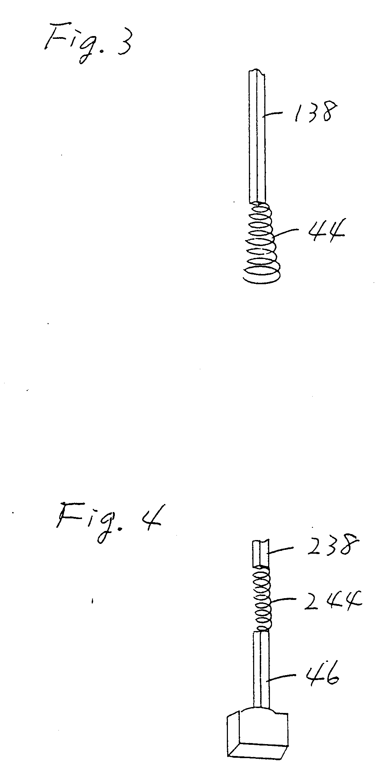

Fig. 3 shows a modified design of the ignition system in which a metal spring 44 is attached to the lower end of a shaft 138 which is fixed to a sparking wheel (not shown). When the lower end of the spring 44 is grasped and turned even slowly, the shaft 138 will rotate suddenly at some point of time against the friction between the wheel and flint, thus generating large sparks.

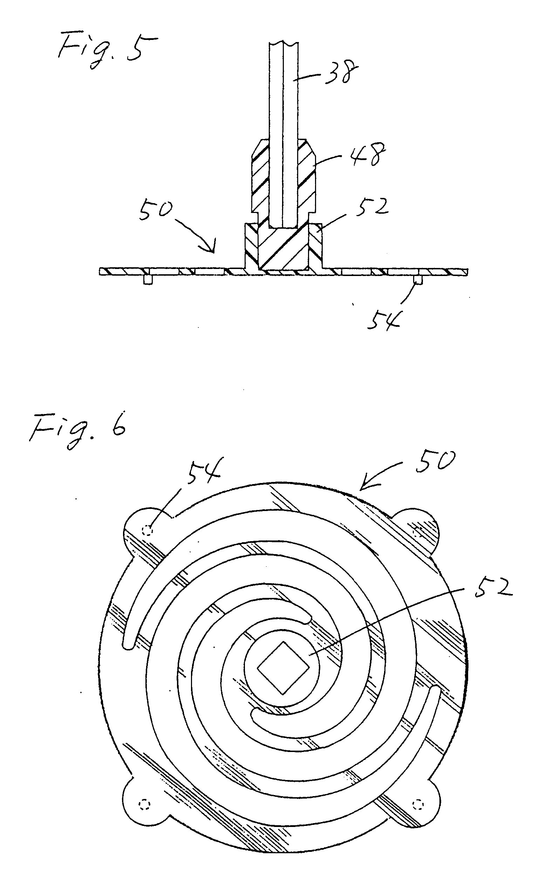

Fig. 4 shows a further modification in which a shaft 238 fixed to a sparking wheel (not shown) is coupled through a spring 244 to a handle 46, which can be grasped and turned.

Figs. 5 and 6 show a still further modification in which the polygonal shaft 38 fixed to the sparking wheel (not shown) can engage at its lower end with a polygonal blind hole of a key 48, which has a polygonal lower end. A whirling plastics spring 50 has a hub 52 formed with an upwardly opening polygonal hole for engagement with the lower end of key 48. The spring 50 further has peripheral downward nails 54 for use as will be explained.

Fig. 7 shows a self-heating beverage container in use, which incorporates the ignition system shown in Figs. 1, 2, 5 and 6. The container includes an outer cylindrical metal can 56 containing beverage 57 and having a top closure 58, which is removable by pulling a pull ring 60.

The container accommodates a heater 62 having a cylindrical metal casing 64, the lower end of which extends outwardly to form the can base 66. The bottom of heater casing 64 is closed and sealed by aluminum foil 68. The can base 66 and foil 68 are covered by a plastics bottom cover 70 which is a snap fit on the can base.

The bottom cover 70 has holes 71 in fixed engagement with the nails 54 of plastics spring 50. The key 48 is normally kept apart from the boss hole of spring 50 and the shaft 38.

The heater casing 64 contains a pyrogen 72 above the upper disc 12 of the ignition system. The disc 12 is held within the casing 64 by the tongues 26 frictionally engaging the casing.

Heat-insulating material 74 is also contained between the disc 12 and a lower support cover 76, except for a space between the discs 12 and 14. The shaft extends rotatably through the material 74 and a central hole of cover 76.

For operation, the top and bottom covers 58 and are removed. The key 48 is inserted and secured in the hub hole of plastics spring 50. The bottom cover is the snapped over the can bottom 66, so that the key 48 breaks the foil 68 and engages with the shaft 38 as shown in Fig. 7.

The bottom cover 70 is then rotated clockwise as seen from below with respect to the can 56, so that the wheel 36 rotates and generates sparks, which fire the pyrogen 72 to heat the beverage 57.

By keeping the key 48 separate from the shaft 38 and the spring 50 boss hole, accidental operation of the heater 62 is prevented.

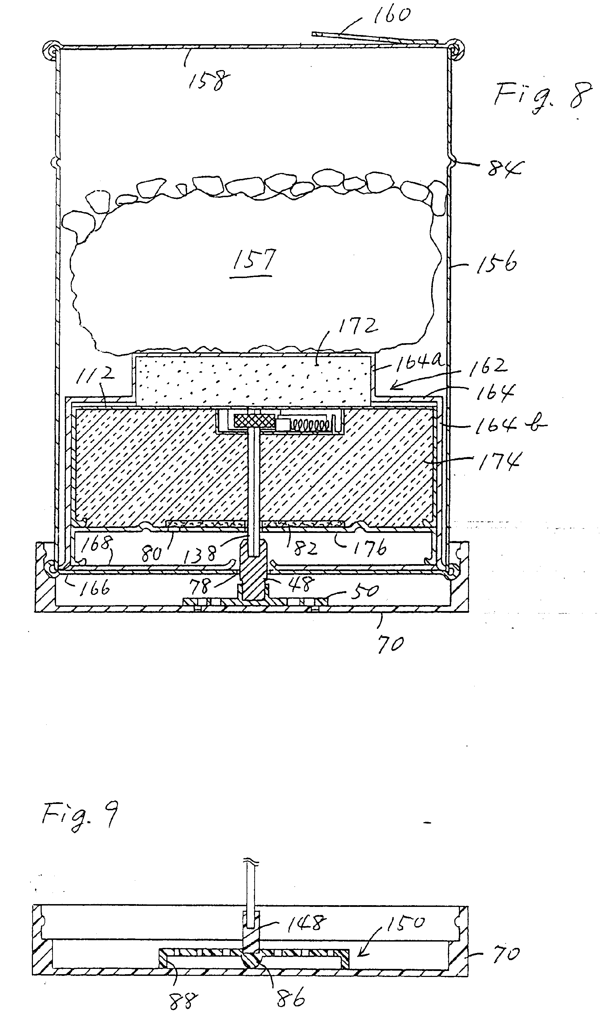

Fig. 8 shows a self-heating food container in use, which incorporates an ignition system substantially as shown in Figs. 1, 2, 5 and 6. The container includes a can 156 containing dehydrated noodles 157. The can 156 has a pull closure 158 removable with a pull ring 160, and its base plate 166 has a central hole 78 through which to pass the key 48.

The key 48 is normally placed on the food 157 in order to prevent operation of the ignition system before the top closure 158 has been opened and the can 156 has been filled with water.

The can 156 also contains a heater 162 enclosed in a casing 164 of tin-plated steel, which is fixed to the base plate 166. The bottom of casing 164 is sealed by an aluminum foil 168 covering the inner side of base plate 166, the outer side of which is covered by a plastics bottom cover 70 as shown in Fig. 7.

The heater casing 164 includes an upper portion 164a encasing a self-burning heating material 172, and a lower portion 164b encasing the igniter and an insulator 174 under the material 172. The material 172 includes a pyrogen which may be composed mainly of silicon-iron alloy and ferric oxide, and a firing agent which may be composed of boric acid and ferric oxide. The insulator 174 may be a zeolite which functions also to absorb odour and gas.

The lower casing portion 164b has a diameter approximately 1-4 mm smaller than that of the can 156. The very small space between the cylindrical walls of can 156 and lower casing portion 164b can prevent the food 157 falling into the space. This helps the consumer pick up all the food from the container during consumption.

The upper casing portion 164a has a diameter 10-20 mm smaller than the lower portion 164b. The sufficient space between the cylindrical walls of can 156 and upper casing portion 164a prevents the can wall being heated dangerously.

The insulator 174 is supported by a lower support cover 176 having a central hole for the shaft 138 and eccentric hole 80 for gas release. The eccentric holes 80 are covered by a seal 82, which may be made of ceramic fibers, non-woven cloth or paper, placed on the cover 176 to keep the insulator 174 from falling.

The ignition system includes an approximately 0.4 mm thick iron support cup 112, which contacts the heater casing 164 so that the heat generated adjacent the top of the ignition system is efficiently conducted to the casing 164.

The operation of this device is substantially the same as that of Fig. 7, except for taking the key 48 from the can 156 and filling the can with water to the level of a bead 84 after removing the top cover 158.

Fig. 9 shows a modified plastics spring 150 having an upper central hole for driving engagement with a key 148. The spring 150 is formed with a hemispherical centre boss 86 for point contact with the bottom cover 70, and peripheral legs 88 fixed to the cover 70. This minimizes the friction between the spring 150 and cover 70.

## Claims

1. An ignition system for a self-heating container including a heater which comprises a pyrogen, the ignition system comprising a metal plate (12) adapted for contact on its one side with a pyrogen, a shaft (38) journalled to the plate, a sparking wheel (36) having an abrasive cylindrical surface and fixed coaxially to the shaft on the other side of the plate, a flint (40) supported by the plate and compressed against the abrasive surface to generate sparks when the wheel is caused to rotate, characterised in that the ignition system comprises also a screen (18) formed on the plate adjacent the abrasive surface and the flint, and an opening (20) formed in the plate adjacent the screen, the screen being angled to deflect sparks towards the opening and pass them through the opening to the one side of the plate.

2. An ignition system according to claim 1, further comprising a spring (50) attached to the shaft.

3. An ignition system according to claim 2, further comprising a key member (48) for coupling the shaft to the spring.

## Patentansprüche

1. Zündsystem für selbstheizende Behälter mit einer Heizung, die ein Pyrogen umfaßt, welches Zündsystem eine Metallplatte (12), die auf ihrer einen Seite mit dem Pyrogen in Berührung tritt, eine Achse (38), die an der Platte gelagert ist, ein Funkenrad (36) mit einer abrasiven zylindrischen Oberfläche, das koaxial auf der Achse auf der anderen Seite in bezug auf die Platte befestigt ist, einen Feuerstein (20), der durch die Platte getragen wird und gegen die abrasive Oberfläche zur Erzeugung von Funken bei Drehung des Rades gepreßt wird, aufweist, dadurch **gekennzeichnet**, daß das Zündsystem weiterhin ein Sieb (18), das an der Platte angrenzend an die abrasive Oberfläche und den Feuerstein ausgebildet ist, und eine Öffnung (20) in der Platte angrenzend an das Sieb umfaßt, welches Sieb derart im Winkel angeordnet ist, daß Funken in Richtung der Öffnung abgelenkt und durch die Öffnung zur anderen Seite der Platte hindurchgeführt werden.

2. Zündsystem nach Anspruch 1, mit einer Feder (55), die an der Achse angebracht ist.

3. Zündsystem nach Anspruch 2, mit einem Schlüsselglied (48) zur Verbindung der Achse und der Feder.

## Revendications

1. Système d'allumage pour récipient auto-chauffant comprenant un dispositif de chauffage comportant un agent pyrogène, le système d'allumage comprenant une plaque métallique (12) adaptée en vue de son contact, par un premier côté, avec un agent pyrogène, un arbre (38) tourillonnant dans la plaque, une roue à étincelles (36) présentant une surface cylindrique abrasive et assujettie coaxialement à l'arbre de l'autre côté de la plaque, une pierre à briquet (40) supportée par la plaque et plaquée contre la surface abrasive pour engendrer des étincelles lorsque la roue est entraînée en rotation, caractérisé en ce que le système d'allumage comprend également un écran (18) formé sur la plaque de façon à être adjacent à la surface abrasive et à la pierre à briquet, et une ouverture (20) formée dans la plaque de façon à être adjacente à l'écran, l'écran étant disposé suivant un certain angle pour faire dévier des étincelles vers l'ouverture et les faire passer à travers l'ouverture vers le premier côté de la plaque.

2. Système d'allumage selon la revendication 1, comprenant en outre un ressort (50) assujetti à l'arbre.

3. Système d'allumage selon la revendication 2, comprenant en outre un élément formant clé (48) servant à coupler l'arbre au ressort.
